# EUROPÄISCHE PATENTSCHRIFT

(11) **EP 1 205 110 B1**
(45) Veröffentlichungstag und Bekanntmachung des Hinweises auf die Patenterteilung: **26.05.2004**
(21) Anmeldenummer: 01124774.9
(22) Anmeldetag: 17.10.2001
(51) Int. Cl.: A22C 11/12

(54) **Längeneinheit mit Clipmodul**
Length measuring unit with a clipping machine
Dispositif de mesure de longueurs avec un dispositif de serrage par clip

(30) Priorität: 08.11.2000 DE 10055310
(43) Veröffentlichungstag der Anmeldung: 15.05.2002
(73) Patentinhaber: Albert Handtmann Maschinenfabrik GmbH & Co. KG, 88400 Biberach (DE)
(72) Erfinder: Müller, Gerhard, 88433 Schemmerhofen (DE); Staudenrausch, Georg, 88400 Biberach/Rissegg (DE)
(74) Vertreter: Grünecker, Kinkeldey, Stockmair & Schwanhäusser Anwaltssozietät

(56) Entgegenhaltungen:
- EP-A- 0 301 768
- WO-A-88/07819
- WO-A-98/17119
- FR-A- 1 414 569
- US-A- 5 109 648
- US-A- 5 947 809

## Beschreibung

Die Erfindung betrifft eine Vorrichtung sowie ein Verfahren zur Wurstherstellung gemäß den Oberbegriffen der Ansprüche 1 und 9.

Bei der automatischen Wurstherstellung werden üblicherweise Füllmaschinen eingesetzt. Solche Füllmaschinen bringen Wurstbrät durch ein Füllrohr in eine Wursthülle ein. Die Wursthülle befindet sich dazu in gerafftem Zustand direkt auf dem Füllrohr oder in einer entsprechenden Hülse, die über das Füllrohr geschoben wird. Im allgemeinen befindet sich am Ende des Füllrohres eine sogenannte Darmbremse bzw. ein Bremsring. Nach dem Ausstoß einer Wurstbrätportion aus dem Füllrohr, die einer einzelnen Wurst entspricht, wird die Wursthülle mit Hilfe des Bremsringgetriebes und einer Abdrehvorrichtung abgedreht. Um das Wurstbrät durch das Füllrohr zu pressen, wird ein entsprechendes Füllorgan eingesetzt, dass das Wurstbrät intermittierend in das Füllrohr befördert. Eine solche Füllmaschine ist z.B. in dem europäischen Patent Nr. 02 32 81 2 beschrieben.

Um Würste mit konstanter Länge sicherstellen zu können, wird dem Füllrohr eine angetriebene Längeneinheit nachgeschaltet. Diese Längeneinheit zieht die Wursthülle durch den Bremsring hindurch vom Füllrohr ab. Während des Abdrehvorgangs wird die bereits gefüllte Wurst durch das Längengerät daran gehindert, sich mit dem gedrehten Teil der Wursthülle mitzudrehen.

Durch Einstellung der Abfördergeschwindigkeit während der Wurstbefüllung im Verhältnis zu der Füllgutausstoßgeschwindigkeit kann die Länge der einzelnen Würste festgelegt werden. Die Geschwindigkeit, mit der die gefüllte Wursthülle abbefördert wird, wird in Abhängigkeit einer Soll-, Füllgutausstoßgeschwindigkeit eingestellt. Ein derartiges Verfahren ist in der deutschen Offenlegungsschrift 24 02 81 7 beschrieben.

Es ist auch bereits bekannt, die entstehenden Wurstenden über sogenannte "Klipper" zu verschließen. Das Verschließen der Würste durch den Klipper erfolgt entweder durch Verschließen der bereits hergestellten abgedrehten Würste per Hand, was zeitaufwendig ist. Es wurde auch bereits vorgeschlagen, einen sogenannten Klipper direkt am Füllrohr vorzusehen. Bei diesem Verfahren werden die gefüllten Wursthüllen durch das Klippen in Einzelwürste unterteilt und verschlossen. Es hat sich jedoch gezeigt, dass die Verwendung derartiger Klipper direkt am Füllrohr den Nachteil mit sich bringen, dass sich das Volumen und die äußere Form der einzelnen Würste nur unzureichend reproduzieren lässt, insbesondere dann, wenn Naturdarm als Wursthülle eingesetzt wird. Zum einen sind bei Naturdarm die Wanddicke und auch das Kaliber nicht konstant, so dass sich unterschiedliche Wurstformen ergeben können, zum Anderen kann sich auf Grund der nicht konstanten Dehnfähigkeit bei ungleichmäßigem Füllgutausstoßverlauf eine ungleichmäßige äußere Form ergeben. Dadurch, dass bei den gefüllten Wursthüllen durch das Klippen das Füllgut zusätzlich verdängt wird, ergeben sich Verformungen an den Wurstenden.

Die Druckschrift FR 1414569 zeigt eine Vorrichtung zur Wurstherstellung, bei der Würste durch eine Fülleinrichtung und Abdreheinrichtung gefüllt und abgedreht werden, und dann in einer Kette nach unten hängen. Die Würste werden dann durch eine Einrichtung weitertransportiert und dann durch den Clipper geclippt.

Die Druckschrift US 5109648 beschreibt einen Clipper mit Schlaufenleger. Die Druckschrift WO 9817119 zeigt eine Vorrichtung zur Wurstherstellung mit Übergabeeinheit und die Druckschrift US 5947809 zeigt ein Steuerverfahren zur Wurstherstellung.

Ausgehend von diesem Stand der Technik liegt der vorliegenden Erfindung die Aufgabe zugrunde eine Vorrichtung und ein Verfahren zur Wurstherstellung bereitzustellen, mit dem die Würste einfach verschlossen werden können und dennoch Würste mit gleicher Länge und gleichem Volumen - insbesondere auch mit Naturdarm als Wursthülle - hergestellt werden können.

Diese Aufgabe wird durch die Merkmale der Ansprüche 1 und 9 gelöst.

Dadurch, dass die gefüllten Wursthüllen zunächst über eine Längeneinheit kontrolliert abgeführt und in eine vorbestimmte Form gebracht werden, können sie am Ende der Längeneinheit sehr genau über das Clipmodul in einzelne Würste unterteilt werden, die eine gleiche Form und ein exakt gleiches Volumen auch bei der Verwendung von Naturdarm aufweisen. Somit ergeben sich bessere Gewichte bei Aufschnittsware durch konstante Füllkaliber und bessere Gewichte bei Wurststrängen insbesondere bei der ersten und letzten Portion. Dadurch, dass die gefüllten Wursthüllen erst in Transportrichtung nach der Längeneinheit verschlossen werden, ist eine höhere Ausstoßleistung des Füllguts möglich. Durch die Anordnung des Clipmoduls nach der Längeneinheit ist auch eine bessere Synchronisation der Füll- und Verschlussfunktion möglich.

Gemäß der Erfindung sind die Fülleinheit, die Längeneinheit und das Clipmodul über Steuerleitungen mit einer Steuerung für die Vorrichtung zur Wurstherstellung verbunden.

Somit können die Funktionen der Fülleinheit, Längeneinheit und des Clipmoduls synchron zueinander verlaufen.

Dem Füllrohr kann zusätzlich eine Abdreheinheit zugeordnet sein, so dass die Option vorhanden ist, die gefüllten Wursthüllen durch Abdrehen zu unterteilen.

Es ist vorteilhaft, wenn das Clipmodul einen Abschneider umfasst, so dass das Verschließen und Abschneiden platzsparend in einer Einheit erfolgen kann. Vorteilhafterweise umfasst das Clipmodul auch einen Schlaufeneinleger für die herzustellenden Würste. Das Clipmodul kann mit einer Übergabeeinheit verbunden sein, die die hergestellten Würste dann einem Förderband oder einer Aufhängeeinrichtung zuführt.

Weiter können auch die Übergabeeinheit und das Förderband oder die Aufhängeeinrichtung mit der Steuerung der Vorrichtung zur Wurstherstellung verbunden sein, um auch deren Funktionen mit den Funktionen der Fülleinheit, des Clipmoduls und der Längeneinheit zu synchronisieren.

Es ist vorteilhaft, wenn das Clipmodul die gefüllten Wursthüllen an zwei Stellen nebeneinander verschließt, wobei der Abschneider des Clipmoduls die gefüllten Wursthüllen dann zwischen den zwei Stellen abschneidet. Das Clipmodul kann von der Steuereinrichtung so gesteuert werden, dass ein Abschneiden nur nach jedem n-ten Verschließen erfolgt, um so Wurststränge mit einer bestimmten Wurstanzahl zu erhalten (n ∈ IN).

Wird die gefüllte Wursthülle vor der Längeneinheit durch Abdrehen unterteilt, so kann das Clipmodul die gefüllten Wursthüllen in der Abdrehstelle zweifach verschließen.

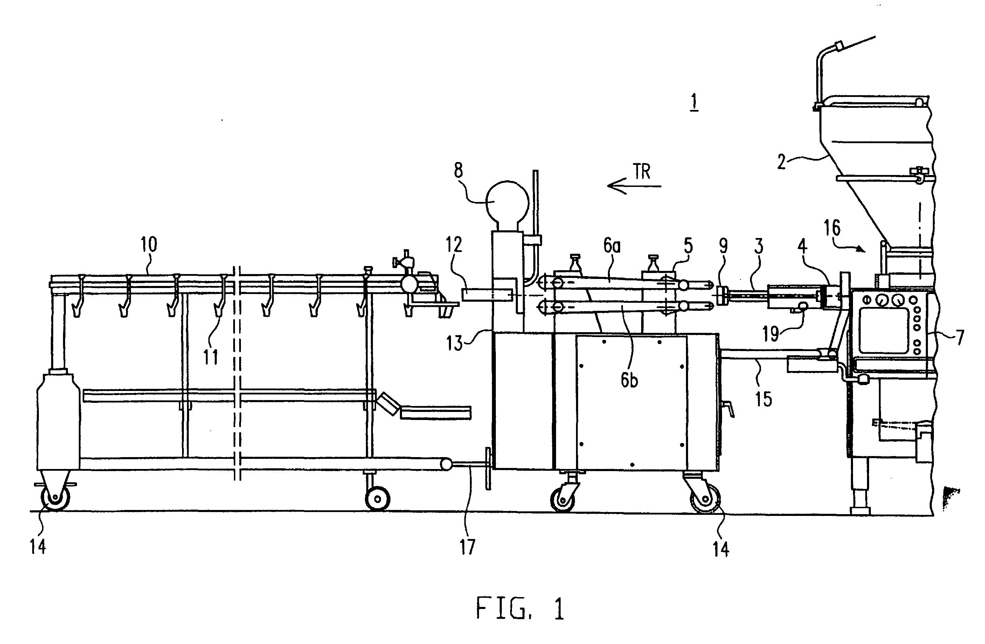

Die vorliegende Erfindung wird nachfolgend unter Bezugnahme der einzigen Figur beschrieben, die eine Vorrichtung zur Wurstherstellung gemäß der vorliegenden Erfindung zeigt.

Die Figur zeigt schematisch eine Ausführungsform der erfindungsgemäßen Vorrichtung. Eine Fülleinheit 16 umfaßt einen Einfülltrichter 2 für das Wurstbrät und ein Füllrohr 3. Aus dem Füllrohr 3 wird das Wurstbrät ausgestoßen. Dazu kann innerhalb der Fülleinheit 16 eine nicht gezeigte Flügelzellenpumpe vorgesehen sein. Das Füllrohr 3 kann mit Hilfe der optional vorgesehenen Abdrehvorrichtung 4 um seine eigene Achse gedreht werden. Am Ende des Füllrohres 3 befindet sich ein Bremsringgehäuse 9, durch das mit Hilfe der Längeneinrichtung 5 die Wursthülle abgezogen wird, während sie durch das Füllrohr 3 befüllt wird. Die Längeneinheit 5 umfasst zwei angetriebene Endlosbänder 6a und 6b, die zwischen sich die gefüllte Wursthülle abtransportieren.

Die Endlosbänder 6a, 6b der Längeneinheit 5 werden über einen nicht extra dargestellten Antrieb angetrieben. In diesem Ausführungsbeispiel ist die Längeneinheit eine gesonderte Einheit, die auf Rollen 14 steht und somit beweglich ist. Die Längeneinheit 5 kann über eine Befestigung 15 mit der Fülleinheit 16 verbunden werden. An der Längeneinheit 5 ist über eine schematisch dargestellte Halterung 13 an dem in Transportrichtung TR der Würste hinterem Ende ein Clipmodul 8 angeordnet. Das Clipmodul 8 umfasst einen Klipper, wie er im fleischverarbeitenden Gewerbe zum Herstellen von Verschlüssen bei Würsten eingesetzt wird. Weiter kann das Clipmodul 8 einen integrierten Abschneider zum Durchtrennen der einzelnen Würste sowie einen Schlaufeneinleger umfassen. In Transportrichtung TR nach dem Clipmodul 8 befindet sich eine Übergabeeinheit 12, die die verschlossenen Würste an eine Aufhängeeinheit 10 mit mehreren Haken 11 weitergibt. Alternativ dazu kann die Übergabeeinheit 12 die fertigen Würste auch an einen Auslauf mit Förderband weitergeben. Auch die Aufhängeeinheit 10 ist auf Rollen 14 gelagert und über eine Befestigung 17 mit der Längeneinheit verbunden.

Die Vorrichtung zur Wurstherstellung umfasst weiter eine Steuerung 7. Die Steuerung 7 ist über nicht gezeigte Leitungen mit der Fülleinheit 16 der Längeneinheit 5 dem Chipmodul 8 sowie der Übergabeeinheit 12 verbunden. So ist es möglich, die Funktionen der Fülleinheit 16 der Längeneinheit 5 des Clipmoduls 8 und der Übergabeeinheit 12 zu steuern und zu synchronisieren. Die Steuerung 7 ist in der Fülleinheit 16 eingebaut.

Der Betrieb einer derartigen Vorrichtung zur Wurstherstellung wird nun im folgenden beschrieben. In an sich bekannterweise wird das Bremsringgehäuse 9 mit Hilfe eines Schwenkhebelmechanismus 19 von dem Füllrohr 3 weggeschwenkt. Eine geraffte Wursthülle wird auf das Füllrohr aufgebracht und das Bremsringgehäuse 9 wird wieder zurückgeschwenkt. Über einen Trichter 2 wird Wurstbrät in die Vorrichtung eingefüllt. Mit Hilfe der in der Fülleinheit 16 befindlichen Flügelzellenpumpe wird das Wurstbrät durch das Füllrohr 3 ausgepresst und füllt die Wursthülle. Diese wird dadurch von dem Füllrohr 3 abgezogen. Die Längeneinheit 5, die über die Rollen 14 genau zu dem Bremsringgehäuse 9 ausgerichtet wurde und über die Befestigung 15 mit der Fülleinheit 16 verbunden wurde, erfasst dann mit ihren Endlösbändem 6a und 6b die Wursthülle. Die Endlosbänder 6a und 6b werden so angetrieben, dass sie sich von dem Füllrohr 3 wegbewegen. Zur Aufrechterhaltung der nötigen Spannung befindet sich in dem Bremsringgehäuse 9 ein Bremsring, der die Wursthülle beim Abzug vom Füllrohr 3 unter geringer Spannung hält. Die Fülleinheit 16 führt der Wursthülle kontinuierlich Wurstbrät für mehrere Würste zu. Die gefüllte Wursthülle wird dann über die Längeneinheit 5 in Transportrichtung entlang dem Pfeil TR weiterbefördert. Durch Einstellen des Abstands der Transportbänder 6a, 6b zueinander und deren Geschwindigkeit entsteht somit eine bestimmte Wurstform. Die in der Längeneinheit 5 transportierten gefüllten Wursthüllen sind noch nicht unterteilt. Am Ende der Längeneinheit 5 ist der Clipmodul 8 über eine schematisch dargestellte Halterung 13 angeordnet und unterteilt und verschließt die gefüllte Wursthülle in Einzelwürste. Dabei können jeweils zwei Metallklips zwischen zwei Einzelwürste geklemmt werden. Das Clipmodul kann bei Bedarf auch einen Schlaufeneinleger umfassen, so dass die Einzelwürste dann später an den eingelegten Schlaufen aufgehängt werden können. Das Clipmodul 8 umfasst hier auch einen Abschneider, der nach jedem n-ten Verschließen zwei benachbarte Würste zwischen den Metallklips abschneidet, um so Wurststränge mit bestimmter Wurstanzahl zu erzeugen.

Die Einzelwürste oder Wurststränge mit bestimmter Wurstanzahl werden dann in Transportrichtung TR der Übergabeeinheit 12 übergeben, die die Einzelwürste oder Wurststränge dann an die Haken 11 der Aufhängeeinheit 10 übergibt. Alternativ dazu kann die Übergabeeinheit 12 die Einzelwürste oder Wurststränge auch an einen Auslauf mit Förderband weitergeben. Wie bereits beschrieben, müssen die Funktionen des Clipmoduls 8, d.h. das Verschließen, das Abtrennen und das Schlaufenlegen zu den Funktionen der Längeneinheit, wie z.B. Geschwindigkeit der Förderbänder 6a, 6b sowie zu den Funktionen der Fülleinheit 16, wie z.B. Füllgutausstoßmenge, und Füllgutausstoßgeschwindigkeit synchronisiert sein. Somit kann entsprechend dem Takt des Clipmoduls 8 eine exakte Wurstlänge mit genau definierten, reproduzierbaren Füllvolumen hergestellt werden. Durch Servoantriebstechnik kann die Portionierleistung erhöht werden. Auch die Übergabeeinheit 12 wird über die Steuerung 7 gesteuert, so dass ein kontinuierlicher Abtransport der Würste möglich ist.

Alternativ zu dem zuvor beschriebenen Betrieb kann die Fülleinheit 16 auch jeweils die Portion Wurstbrät für eine einzelne Wurst durch das Füllrohr 3 ausstoßen, wonach das Füllrohr 3 zusammen mit dem gerafften, noch nicht gefüllten Wursthüllenmaterial durch das Abdrehgetriebe 4 gedreht wird. Da die bereits gefüllte Wursthülle durch die Längeneinheit 5 bzw. dessen Endlosbänder 6a, 6b gehalten wird, entsteht eine Abschnürung, die zur Ausbildung einzelner Würste führt. Das Clipmodul 8 kann dann die einzelnen Würste an der Abschnürung verschließen, indem z.B. links und rechts neben der Abschnürung zwei Klips festgeklippt werden. Die Anordnung des Clipmoduls 8 am in Transportrichtung gesehenen hinteren Ende der Längeneinheit 5 ermöglicht ein einfaches und reproduzierbares Verschließen der einzelnen Würste. Darüber hinaus kann eine erfindungsgemäße Längeneinheit 5 auch mit herkömmlichen Fülleinheiten 16 kombiniert werden.

## Patentansprüche

1. Vorrichtung zur Wurstherstellung (1) mit einer Fülleinheit (16) mit Füllrohr (3) zum Befüllen von Wursthüllen, einer Längeneinheit (5) zum kontrollierten Abführen der gefüllten Wursthüllen,
**dadurch gekennzeichnet, dass**
in Transportrichtung der gefüllten Wursthüllen unmittelbar nach der Längeneinheit (5) ein Clipmodul (8) zum Verschließen der gefüllten Wursthüllen angeordnet ist,
und die Vorrichtung weiter eine Steuereinrichtung (7) umfasst, die die Funktion des Clipmoduls (8) zu den Funktionen der Längeneinheit (5) und Fülleinheit (16) synchronisiert.

2. Vorrichtung nach Anspruch 1, **dadurch gekennzeichnet, dass**
dem Füllrohr (3) eine Abdreheinheit (4) zugeordnet ist.

3. Vorrichtung nach Anspruch 1 oder 2, **dadurch gekennzeichnet, dass**
das Clipmodul (8) einen Abschneider umfasst.

4. Vorrichtung nach mindestens einem der vorhergehenden Ansprüche, **dadurch**
**gekennzeichnet, dass**
das Clipmodul (8) einen Schlaufenleger umfasst.

5. Vorrichtung nach mindestens einem der vorhergehenden Ansprüche, **dadurch**
**gekennzeichnet, dass**
sich an das Clipmodul (3) in Transportrichtung der gefüllten Wursthüllen eine Übergabeeinheit (12) anschließt.

6. Vorrichtung nach mindestens einem der vorhergehenden Ansprüche, **dadurch**
**gekennzeichnet, dass**
in Transportrichtung der gefüllten Wursthüllen nach der Übergabeeinrichtung (12) ein Förderband folgt.

7. Vorrichtung nach mindestens einem der vorhergehenden Ansprüche, **dadurch**
**gekennzeichnet, dass**
in Transportrichtung der gefüllten Wursthüllen nach der Übergabeeinrichtung (12) eine Aufhängeeinheit (10) folgt.

8. Vorrichtung nach Anspruch 1, 5 und 7, **dadurch gekennzeichnet, dass**
die Übergabeeinheit (12) sowie das Förderband oder die Aufhängeeinrichtung mit der Steuerung für die Vorrichtung zur Wurstherstellung über Steuerleitungen verbunden sind, um deren Funktionen mit den Funktionen der Fülleinheit (16), der Längeneinheit (5) und des Clipmoduls (8) zu synchronisieren.

9. Verfahren zum Herstellen von Würsten, wobei Wursthüllen von einer Fülleinheit (16)über ein Füllrohr (3) befüllt und über eine Längeneinheit (5) von dem Füllrohr (3) kontrolliert abgeführt werden,
**dadurch gekennzeichnet, dass**
die gefüllten Wursthüllen unmittelbar nach der Längeneinheit (5) durch ein Clipmodul (8) verschlossen werden, und die Funktion des Clipmoduls zu den Funktionen der Längeneinheit (5) und der Fülleinheit (16) synchronisiert sind.

10. Verfahren nach Anspruch 9, **dadurch gekennzeichnet, dass**
die Wursthüllen nach dem Füllen abgedreht werden, bevor sie über die Längeneinheit (5) abgeführt werden.

11. Verfahren nach einem der Ansprüche 9 oder 10, **dadurch gekennzeichnet, dass**
das Clipmodul (8) die gefüllten Wursthüllen an zwei Stellen nebeneinander verschließt.

12. Verfahren nach Anspruch 11, **dadurch gekennzeichnet, dass**
das Clipmodul (8) die gefüllten Wursthüllen zwischen den zwei Stellen abschneidet.

13. Verfahren nach einem der Ansprüche 9 bis 12, **dadurch gekennzeichnet, dass**
ein Abschneiden nach dem n-ten Verschließen erfolgt, um so Wurststränge mit einer bestimmten Anzahl zu erhalten (n e IN).

14. Verfahren nach einem der Ansprüche 9 bis 13, **dadurch gekennzeichnet, dass**
das Clipmodul (8) die gefüllten Wursthüllen in der Abdrehstelle zweifach verschließt.

15. Verfahren nach mindestens einem der Ansprüche 9 bis 14, **dadurch gekennzeichnet, dass**
die von dem Clipmodul (8) verschlossenen gefüllten Wursthüllen einer Übergabeeinheit (12) zugeführt werden.

16. Verfahren nach mindestens einem der Ansprüche 9 bis 15, **dadurch gekennzeichnet, dass**
die gefüllten Wursthüllen in Transportrichtung nach der Übergabeeinheit (12) einem Förderband oder Aufhängeeinheit übergeben werden.

17. Verfahren nach mindestens einem der Ansprüche 8 bis 16, **dadurch gekennzeichnet, dass**
die Funktionen des Clipmoduls (18) zu den Funktionen der Übergabeeinheit synchron verlaufen.

## Claims

1. A sausage-producing device (1) comprising a stuffing unit (16) with a charging pipe (3) for stuffing sausage skins, a length-dimensioning unit (5) for controlled removal of the stuffed sausage skins,
**characterized in that**
a clip module (8) for closing the stuffed sausage skins is arranged directly after said length-dimensioning unit (5) when seen in the direction of transport of the stuffed sausage skins,
and that the device additionally comprises a control means (7), which synchronizes the function of the clip module (8) with the functions of the length-dimensioning unit (5) and of the stuffing unit (16).

2. A device according to claim 1, **characterized in that**
the charging pipe (3) has associated therewith a twist-off unit (4).

3. A device according to claim 1 or 2, **characterized in that**
the clip module (8) includes a cutter.

4. A device according to at least one of the preceding claims, **characterized in that**
the clip module (8) includes a loop former.

5. A device according to at least one of the preceding claims, **characterized in that**,
when seen in the direction of transport of the stuffed sausage skins, the clip module (8) is followed by a transfer unit (12).

6. A device according to at least one of the preceding claims, **characterized in that**,
when seen in the direction of transport of the stuffed sausage skins, the transfer unit (12) is followed by a conveyor belt.

7. A device according to at least one of the preceding claims, **characterized in that**,
when seen in the direction of transport of the stuffed sausage skins, the transfer unit (12) is followed by a suspension unit (10).

8. A device according to claims 1, 5 and 7, **characterized in that**
the transfer unit (12) as well as the conveyor belt or the suspension unit are connected to the control means for the sausage-producing device via control lines so as to synchronize the functions of these components with the functions of the stuffing unit (16), of the length-dimensioning unit (5) and of the clip module (8).

9. A method of producing sausages comprising the steps of stuffing sausage skins by a stuffing unit (16) via a charging pipe (3) and transporting them away from said charging pipe (3) in a controlled manner via a length-dimensioning unit (5), **characterized in that**
the stuffed sausage skins are closed by a clip module (8) directly after the length-dimensioning unit (5), and that the function of the clip module is synchronized with the functions of the length-dimensioning unit (5) and of the stuffing unit (16).

10. A method according to claim 9, **characterized in that**
the sausage skins are twisted off after stuffing and before they are transported away via the length-dimensioning unit (5).

11. A method according to one of the claims 9 or 10, **characterized in that**
the clip module (8) closes the stuffed sausage skins at two juxtaposed points.

12. A method according to one of the claims 9 to 12, **characterized in that**
the clip module (8) cuts through the stuffed sausage skins between these two points.

13. A method according to one of the claims 9 to 12, **characterized in that**
cutting through is effected after each n-th closure so as to obtain chains of sausages which comprise a specific number of sausages (n ∈ IN).

14. A method according to one of the claims 9 to 13, **characterized in that**
the clip module (8) closes the stuffed sausage skins twice at the twist-off point.

15. A method according to at least one of the claims 9 to 14, **characterized in that**
the stuffed sausage skins, which have been closed by the clip module (8), are advanced to a transfer unit (12).

16. A method according to at least one of the claims 9 to 15, **characterized in that,**
when seen in the direction of transport, the stuffed sausage skins are transferred to a conveyor belt or a suspension unit after the transfer unit (12).

17. A method according to at least one of the claims 8 to 16, **characterized in that**
the functions of the clip module (18) take place in synchronism with the functions of the transfer unit.

## Revendications

1. Dispositif de fabrication de saucisses (1) présentant une unité de remplissage (16) comportant une filière de remplissage (3) destinée à remplir des enveloppes pour saucisses, une unité de mesure de longueurs (5) destinée à évacuer de matière contrôlée les enveloppes pour saucisses remplies,
**caractérisé en ce que**,
un module à clipper(8) est disposé, dans la direction de transport, directement en aval de l'unité de mesure de longueurs (5) pour fermer les enveloppes pour saucisses remplies,
et le dispositif comprend en outre un dispositif de commande (7), qui synchronise la fonction du module à clipper (8) avec les fonctions de l'unité de mesure de longueurs (5) et l'unité de remplissage (16).

2. Dispositif selon la revendication 1, **caractérisé en ce que**
une unité de vrillage (4) est associée à la filière de remplissage (3).

3. Dispositif selon la revendication 1 ou 2, **caractérisé en ce que**
le module à clipper (8) comprend un couteau.

4. Dispositif selon au moins l'une des revendications précédentes, **caractérisé en ce que**
le module à clipper (8) comprend un dispositif à poser des noeuds.

5. Dispositif selon au moins l'une des revendications précédentes, **caractérisé en ce que**
une unité de transfert (12) fait suite au module à clipper (3) dans la direction de transport des enveloppes pour saucisses remplies.

6. Dispositif selon au moins l'une des revendications précédentes, **caractérisé en ce que**
une bande transporteuse suit l'unité de transfert (12) dans la direction de transport des enveloppes pour saucisses remplies.

7. Dispositif selon au moins l'une des revendications précédentes, **caractérisé en ce que**
une unité d'accrochage (10) suit l'unité de transfert (12) dans la direction de transport des enveloppes pour saucisses remplies.

8. Dispositif selon la revendication 1, 5 et 7, **caractérisé en ce que**
l'unité de transfert (12) ainsi que la bande transporteuse ou l'unité d'accrochage sont reliées à la commande du dispositif de fabrication de saucisses, par l'intermédiaire de lignes de commande, afin de synchroniser leurs fonctions avec les fonctions de l'unité de remplissage (16), de l'unité de mesure de longueurs (5) et du module à clipper (8).

9. Procédé de fabrication de saucisses, dans lequel des enveloppes pour saucisses sont remplies par une unité de remplissage (16) par l'intermédiaire d'une filière (3) et sont évacuées de manière contrôlée de la filière de remplissage (3) par l'intermédiaire d'une unité de mesure de longueurs (5),
**caractérisé en ce que**
immédiatement en aval de l'unité de mesure de longueurs (5), les enveloppes pour saucisses remplies sont fermées par un module à clipper (8), et la fonction du module à clipper est synchronisée avec les fonctions de l'unité de mesure de longueurs (5) et de l'unité de remplissage (16).

10. Procédé selon la revendication 9, **caractérisé en ce que**
après le remplissage, les enveloppes pour saucisses sont vrillées avant d'être évacuées par l'intermédiaire de l'unité de mesure de longueurs (5).

11. Procédé selon l'une des revendications 9 et 10, **caractérisé en ce que**
le module à clipper (8) ferme les enveloppes pour saucisses remplies en deux points adjacents l'un de l'autre.

12. Procédé selon la revendication 11, **caractérisé en ce que**
le module à clipper (8) coupe les enveloppes pour saucisses remplies entre les deux points.

13. Procédé selon l'une des revendications 9 à 12, **caractérisé en ce que**
une coupe s'opère après la n-ième fermeture afin d'obtenir des rangs de saucisses comportant un certain nombre de saucisses (n ∈ IN).

14. Procédé selon l'une des revendications 9 à 13, **caractérisé en ce que**
le module à clipper (8) ferme doublement les enveloppes pour saucisses remplies au point de vrillage.

15. Procédé selon l'une des revendications 9 à 14, **caractérisé en ce que**
les enveloppes pour saucisses remplies fermées par le module à clipper (8) sont amenées à une unité de transfert (12).

16. Procédé selon l'une des revendication 9 à 15, **caractérisé en ce que**
après l'unité de transfert (12), dans la direction de transport, les enveloppes pour saucisses remplies sont transférées sur une bande transporteuse ou une unité d'accrochage.

17. Procédé selon l'une des revendications 8 à 16, **caractérisé en ce que**
les fonctions du module à clipper (18) se déroulent de manière synchrone aux fonctions de l'unité de transfert.
